# EUROPEAN PATENT APPLICATION

(11) **EP 1 213 583 A1**
(43) Date of publication of application: **12.06.2002**
(21) Application number: 00126778.0
(22) Date of filing: 06.12.2000
(51) Int. Cl.: G01N 31/22

(54) **General method for the covalent immobilisation of indicators in, or onto a support useful for the fabrication of optical sensors**

(71) Applicant: Innosense S.r.l., 10010 Colleretto Giacosa (Torino) (IT)
(72) Inventor: Caputo, Giuseppe, 10125 Torino (IT); Della Ciana, Leopoldo, 10015 Ivrea, (Torino) (IT)
(74) Representative: Rambelli, Paolo

(57) **Abstract**

The invention discloses a method for the covalent immobilisation of indicator dyes in, or onto a support. The dyes can work in absorbance, reflectance or fluorescence mode. The dyed support is useful as the transducer element in an optical sensor. According to the invention, Figure 1, the indicator dye is dissolved or suspended in a solvent medium, optionally containing electrolytes to control ionic strength and pH. Aqueous formaldehyde is then added to the mixture. A support to be used as the sensing element in an optical sensor is added to the mixture and stirred or shaken for a period of time at a temperature comprised between room temperature and 100°C. Suitable supports include inorganic and organic polymers with primary and/or secondary amino groups.

## Description

A key step in the fabrication of an indirect optical sensor or optodes is the immobilisation of an indicator compound in, or onto, a solid support. The role of the indicator compound is of converting an analyte concentration into an optical signal. In other words, an indicator is a transducer for a chemical species that cannot be detected directly by optical means (This technology is thoroughly reviewed in the books: Fibre Optic Chemical Sensors and Biosensors, vols. I and II, Wolfbeis O.S. Ed., CRC Press, Boca Raton, FL, 1991).

Indicators are either absorbance- or fluorescence based. Absorbance based indicators undergo a spectral change upon binding a chemical species. Fluorescent indicators normally operate on the basis that either the complexed or the uncomplexed species is fluorescent, a fluorescent spectral change being rather uncommon.

Indicator chemistry is well established (Bishop E, Ed., Indicators, Pergamon Press, Oxford, 1972; Cheng K.L., Ueno, K., and Imamura T., Eds., Handbook of Organic Analytical Reagents, CRC Press, Boca Raton , FL, 1982). A great variety of absorbance and fluorescence indicators have been synthesised. Indicator compounds can detect pH, cations, anions, redox potential, electrical potential, gases such as oxygen, carbon dioxide, carbon monoxide, ammonia, nitrogen oxides or neutral species such as water, amines or hydrocarbons. Many bio-molecules can also be detected by indicators.

In order to fabricate an optical sensors, indicators need to be immobilised in, or onto a support.

Such supports are organic or inorganic polymers. These polymeric supports have one or more functions: they act as a rigid support in or onto which the indicator is immobilised; they can provide selectivity for certain species by virtue of their permselectivity; they can prevent, or reduce the amount of, ambient light entering the optical system of the optode.

Indicators have been immobilised onto a wide variety of organic polymers, both hydrophobic and hydrophilic.

Among the latter, especially popular has been cellulose and regenerated cellulose (cuprophane). Chemically modified celluloses, such as cellulose acetate or celluloses with functional groups such as COOH or NH₂ have also been frequently employed.

Other frequently used hydrophilic organic polymers are polyacrylates, polyacrylamides, polyurethanes, polyvinylpyrrolidones and polyamides. Polyamides (nylons) are especially useful, being produced in a variety of modifications, with functional groups such as such as OH, COOH or NH₂ and of different porosity. Compared to cellulose, polyamides have several advantages: they are dimensionally more stable (their swelling is much more limited), they have superior chemical and biological stability and do not need to be stored wet.

Hydrophobic organic polymers have also been used as supports, especially silicones, polyethylene, polystyrene and poly(tetrafluoroethylene). These materials are especially useful in the fabrication of as gas-permeable covers in optodes for O₂, CO₂, NH₃. Another hydrophobic polymer useful in the fabrication of optical sensor is poly(vinyl)chloride (PVC). Membranes made with this material, and incorporating an ionophore and a chromoionophore (the indicator) have been employed in the detection of ionic species such as H⁺, Na⁺, K⁺, Mg²⁺ and Ca²⁺.

Ion-exchange organic polymers have also been used as supports. In this case the indicator is immobilised by electrostatic and van der Waals interactions. Widely used organic cation exchangers are sulphonated polystyrene and Nafion, a perfluorinated ion-exchange polymer also containing sulfonic acid groups. Among the anion exchangers, polystyrenes bearing tertiary or quaternary amino functionalities have been employed.

With respect to inorganic supports, silica glasses have been the material of choice, given their mechanical stability and favourable optical properties. Glasses can be easily chemically modified by means of silanising agents. Zeolites also have been used, especially in the fabrication of gas sensors, where advantage is taken of their controlled porosity.

More recently a new technique, know as the sol-gel method, has been used to create a porous solid matrix capable of mechanically trapping the indicator. Alkoxides such as tetraoctylsilicate (TEOS) are used as starting materials.

Following the choice of indicator and polymeric support, the next step in the fabrication of optode membranes will involve immobilisation of the dye on the support. Three methods are used for this purpose: mechanical, adsorption, electrostatic and covalent immobilisation.

Mechanical immobilisation, also known as physical entrapment is based on the inclusion of the indicator molecules in a cavity which the indicator cannot leave. While this technique is very useful for large molecules such as enzymes, it is difficult to avoid the leaching out of small dye molecules especially in aggressive environments.

Physical adsorption of many indicators onto hydrophobic supports, especially polystyrene supports has been widely used. Binding results from weak electrostatic or van der Waals interactions. This is the simplest method of immobilisation. However, the binding strength is not very high.

Electrostatic interaction is similar to physical adsorption, but produces much more stable sensor membranes. However, it is limited to ion-exchange substrate which bear charges of sign opposite to that carried by the indicator. Moreover, in many cases the indicators employed loose their charge at certain pH intervals. In these cases, instant loss of the indicator generally occurs.

Chemical immobilisation requires the creation of a covalent bond between indicator and a polymer surface. Chemical immobilisation allows the fabrication of the most robust sensors, capable of surviving in many aggressive media, such as blood or gastric juices. While numerous methods of surface modification of polymers exist, which allow the introduction of a wide variety of functional groups such as OH, NH₂, COOH, epoxy, required for covalent coupling, this method has a severe limitation in the lack of such functional groups in great majority of known indicators. Therefore, it has been necessary to synthesise new indicators bearing such or similar functionalities (Saaski, E., McCrae D., Hartl J., Lawrence D. M., Wolthuis R. A., US Patent 5 039 492, Optical pH and gas concentration sensor). This effort requires demanding, multistep procedures in order to produce limited amounts of very expensive materials. In other cases, covalent immobilisation method have been developed, of only limited applicability to some indicators such as phenol red (Peterson, J.I., Goldstein, S.R., Fitzgerald, R.V., and Buckhold, D.W., Fibreoptic pH probe for physiological use, Anal Chem., 52, 864, 1980).

An object of the invention is to provide a new method of chemical immobilisation of wide applicability to available indicator dyes, thereby to provide new optical sensors and optical sensor devices adapted for detecting a change in a wide variety of physical or chemical parameters in a fluid.

The subject matter of the invention is defined by the appended claims.

In the annexed drawings:
- fig.1 shows a general scheme of chemical immobilisation of a dye onto a substrate according to the invention;
- fig.2 shows, by way of example, moieties which are preferably present in the indicator dyes used according to the invention; and

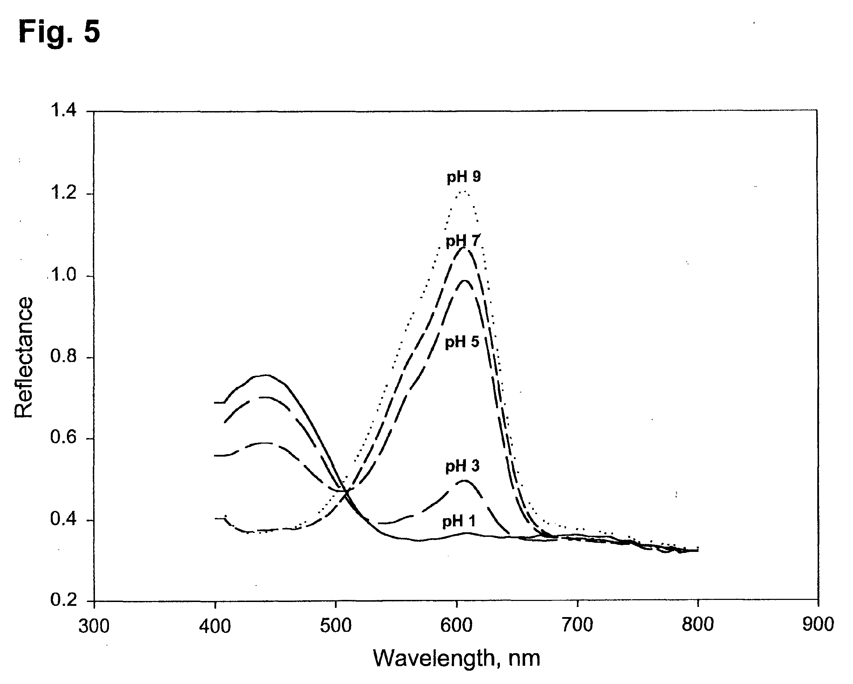

- figs.3-5 are absorbance and reflectance spectra, to which reference is made in the examples which follow.

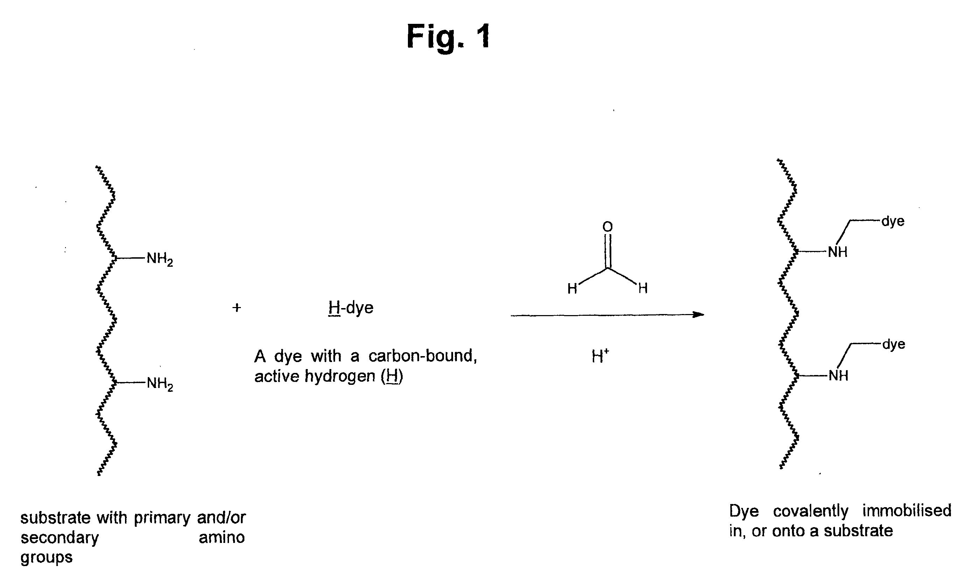

According to the invention, the Mannich reaction can successfully be applied to covalently immobilise indicator dyes to many known polymeric supports, according to the scheme shown in fig.1. Details relating to the Mannich reaction can be found in March J., Advanced Organic Chemistry 4^{th} edition, John Wiley & Sons, New York, NY, 1992, page 900-902; Blicke F.F., Chapter 10, the Mannich Reaction, Organic Reactions, vol.1, John Wiley & Sons, New York, NY, 1942.

According to the invention, the indicator dye is dissolved in an aqueous or partially aqueous, slightly acidic buffer with a pH generally of from 3 to 7. A source of formaldehyde is added to the mixture and the intended support is soaked in it at a moderate temperature (25-100°C, generally at 60°C) for a period of time, generally from 2 to 24 hours. During the incubation time, the substrate can be exposed to ultrasonic waves or gently shaken in an orbital shaker, or stirred with a magnetic stir bar or mechanical stirrer. The dyed support is washed at low and high pH, and/or with organic solvents such as ethanol. The source of formaldehyde may be a commercial formaldehyde solution (e.g. the available 37% solution, stabilised with methanol or paraformaldehyde); the molar concentration of formaldehyde in the reaction medium is usually of from 0.1 M to 1.0 M.

In the case of indicator dyes which are not or are only slightly soluble in water, the indicator dye may be dissolved in an alcoholic solvent, such as ethanol, optionally with co-solvents as specified in the following. The order of addition of the reagents for the Mannich reaction does not appear to be binding; for instance, the indicator, dissolved in mmol concentrations of from about 2 mM - 10 mM, may first be incubated with the substrate and then the formaldehyde source may be added.

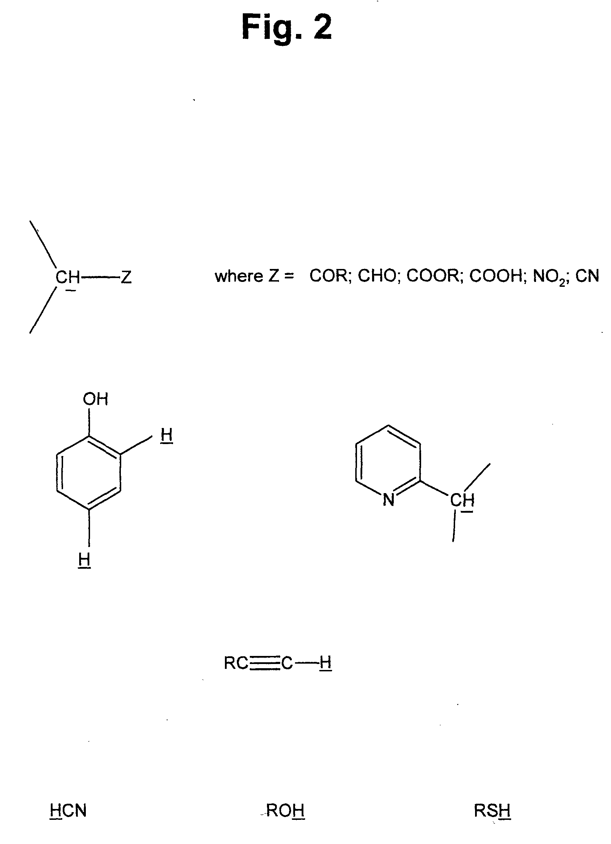

A main requirement for a successful immobilisation is the presence in the molecule to be immobilised of certain active hydrogens; examples of moieties having active hydrogens are shown in fig.2. While many indicator dyes successfully immobilised by the method of the invention have phenolic groups, or other groups listed in fig.2, it is surprising to find that this solid state version of the Mannich reaction works equally well with indicator dyes having only aromatic amino groups (e.g. methylene blue, Azure A, basic fuchsin and many others); such groups are not listed among the activating groups for ordinary, homogeneous Mannich reaction (fig.2).

Surprisingly, it turns out that the technique according to the invention is of very wide applicability, both in terms of indicator molecules and of type of support, and greatly extends the number of robust optical sensors membranes that can be prepared. This is especially important in the detection of analytes in corrosive or extractive matrices, such as gastric juices and blood, respectively.

Another advantage of using the Mannich reaction over other covalent immobilisations method is in the reduced perturbation of the indicator properties, since the alkyl side chain introduced in the indicator dye is only weakly electron attracting and therefore does not alter significantly the physico-chemical properties of the dye. However, a spectral and pK change does occur upon covalent immobilisation, unlike milder methods. These changes however simply reflect the nature of the new environment surrounding the indicator and/or its reduced mobility.

The Mannich immobilisation method developed in the invention is also useful for the co-immobilisation of indicators, which allows the construction of pH optodes of extended range.

In another application of the invention, certain substances, such as detergents, or organic molecules carrying charges, or hydrophilic, or lipophilic groups can be co-immobilised with the indicator dye, in order to vary, or tune, its physico-chemical properties, such as its pKₐ, or its response time.

As was seen above, a substrate polymer suitable for the Mannich immobilisation method should contain primary or secondary amino groups. These amino groups should normally be aliphatic: in other words, arylamines do not normally give the reaction. While some substrates, especially chitosanes, polyimines and polyamides satisfy this requirement, the majority of available materials requires proper treatment in order to introduce amino groups.

Many such methods are well known to the previous art. In particular, silica glasses and many ceramic material including zeolites, alumina and titanium dioxide can be treated with proper silanising agents such as aminopropyltriethoxysilane (APTS) or N-(2-aminoethyl-3-aminopropyl)trimethoxysilane (Plueddemann E. P., Silane coupling Agents, Plenum Press, London, 1991). Such agents are capable of covalently attaching the required primary and/or secondary amino groups to the substrate surface. Some inorganic substrates containing amino groups are commercially available in powder form or as small beads to be used in chromatographic techniques or for protein immobilisation. Such materials are also suitable for the immobilisation of indicator according to the present invention. Silanisation can also be applied to some organic polymers, especially silicones. Silicones require a pre-treatment with ethanolic or methanolic sodium or potassium hydroxides or alkoxides, or with an oxidising flame, in order to free up the silanol groups capable of reacting with aminosilanes.

With regard to other organic polymers without native primary or secondary amino groups and unreactive toward silanes, many other methods exist which allow the introduction of such functional groups. For example, some substrates, have reactive groups easily convertible into amino groups. For example, Eupergit C™, made by Rohm Pharma, is a polyacrylamide derivatised with epoxy groups, which by reaction with ammonia or diamines can achieve the desired goal of introducing the required primary and/or secondary amino groups into the polymer matrix.

A general method for the introduction of amino groups into a wide variety of organic polymers is based on chemical vapour deposition from ammonia or volatile amine vapours.

Yet another general method for achieving the same goal is based on the use of ozone. Accordingly, the polymeric substrates are exposed to a stream of ozone for a period of time comprised between a few minuets to one hour. On many available polymers, including polyolefins, this treatment generates polymer bound peroxides capable of initiating radical polymerisation on appropriate vinyl monomers with functionalised or reactive side chains. Primary and/or secondary amino groups can then be introduced into the substrate by known methods. For example, if epoxy groups are available in the side chain of the grafted polymer, reaction with an excess of α,ω-diaminoalkanes or α,ω-diaminooxaalkanes can provide the desired terminal amino functionalities. Similarly, hydroxyl groups attached to the grafted polymer can be activated by means of reactants such as cyanogen bromide, 2,4,6-trichloro-1,3,5-triazine or 2-fluoro-1-methyl pyridinium toluene-4-sulfonate. Again the reaction of the activated substrates with α,ω-diaminoalkanes or α,ω-diaminooxaalkanes provides substrates suitable for immobilising indicator dyes by means of the Mannich reaction.

Activation of hydroxyl groups and subsequent reaction with α,ω-diaminoalkanes or α,ω-diaminooxaalkanes is also useful with polymers substrates such as celluloses, polyvinyl alcohol, and poly(2-hydroxyethylmethacrylate).

### Detailed description of the invention

The indicator dye (0.1-50 mg) is dissolved in 5 mL of a 0. 1 M MES, pH 4.7 buffer solution. If the dye is not very soluble in this aqueous buffer, the buffer can be made 50% ethanolic by slow addition of and equal volume of ethanol to the stirred buffer. Other co-solvents can be used, especially polar aprotic solvents such as acetonitrile, DMF, DMSO or sulfolane. The dye can also first dissolved in the non-aqueous solvent and then an aliquot added to the mixed aqueous-non aqueous buffer solution. A 0.1 M acetate buffer, pH 4.7 buffer can be used in place of the MES buffer. In some cases the dye can be dissolved in 5 mL of an unbuffered solvent, such as water. In other cases the indicator can be simply suspended in the solvent medium.

In the next step 200 µL of a 37% solution of formaldehyde are added to the 5 mL solution of the dye. If the dye had been dissolved in unbuffered solvent, 10 µL of glacial acetic acid are added at this point.

Next, the solid substrates containing primary and/or secondary amino groups and to be used as the transducer element in optical sensors, are soaked into the indicator solution. The substrates immersed in the dyeing solutions are stirred either magnetically or mechanically, or shaken with an orbital shaker, or subjected to ultrasonic waves. The containers where the immobilisation is performed are kept in a thermostatic bath at a temperature comprised between 20°C and 100°C, preferably around 60°C. The incubation time varies from 2 hours to 24 hours. The dyed substrate is collected, washed with aqueous solutions at high and low pH and/or organic solvents to remove non-covalently bound indicator dye.

In a further embodiment of the invention, the indicator is dissolved in 5 ml of ethanol (examples of indicator concentration include: 2 mM, 5 mM and 10 mM).

A preferred solid immobilisation support for permanent retention of the indicator molecule is a nylon 6,6 membrane supplied in its commercial form as Biodyne B™ from Pall Corporation. The pore surfaces of Biodyne B™ nylon membrane are populated by a high density of quaternary ammonium groups. This results in a positive surface charge over a broad pH range. The positive charge promotes strong ionic binding of negatively charged indicator compounds. These characteristics provide optimal conditions for the immobilisation of the aforementioned indicators.

The Biodyne nylon membrane is incubated in mM concentrations of the indicator (2 mM - 10 mM dissolved in ethanol as described above) for 90 minutes at room temperature.

The indicator modified nylon membrane is then transferred to 15 ml 0.1 M sodium acetate buffer pH 4.5 containing 0.1 to 1.0 M formaldehyde. Formaldehyde is usually added in the solvent supplied as a 37% solution (stabilised with 10% methanol) from Merck KgaA Germany. It has also been noted that addition of solid aldehyde supplied as paraformaldehyde facilitates more accurate preparation of 0.1 M - 1.0 M aldehyde concentrations in the sodium acetate buffer.

The Mannich reaction proceeds overnight for (12-15 hours) typically at 60°C to facilitate immobilisation of the indicator via condensation of the formaldehyde with amino groups present as primary and secondary amines attached to the substrate.

Once the Mannich reaction is completed, the indicator membrane is thoroughly washed, first with acid typically 0.05 M HCl and then alkali (0.05 M NaOH) to remove excess unbound indicator dye. It is important to wash the membranes with both acid and then alkali before rinsing the membrane thoroughly with milliq ultra pure water prior to its application as a pH sensitive membrane.

Preferred embodiments of the Invention are illustrated by the following examples. In all cases pKₐ values of the indicators were obtained at 25°C and constant ionic strength (0.9% NaCl, with buffers at 0.01 M). Absorbance or reflectance spectra of the dyed substrates were taken using a Shimadzu UV-VIS-NIR spectrophotometer model 3101PC or an Ocean Optics PC1000 optical fibre spectrophotometer. pKₐ data were obtained by plotting the function λ_{b}-λ₈₅₀ₙₘ/λₐ-λ₈₅₀ₙₘ vs. pH, where λ_{b} is the absorbance or reflectance at the absorption maximum of the basic form of the indicator dye, λₐ is absorbance or reflectance at the absorption maximum of the acid form of the indicator dye and λ₈₅₀ₙₘ is the absorption or reflectance at 850 nm. The plots were analysed by fitting the data with the four parameter sigmoid function, f = (a - d)/[1 + (x/c)^{b}] + d, where a is the asymptotic maximum, b is the slope, c is the pH at inflection or pKₐ and d is the asymptotic minimum. The fitting was performed using the Marquardt-Levenberg nonlinear least-squares method.

The following examples are included for a further understanding of the invention. However, neither the indicator dye nor the type of support are limited thereto, but it will be understood that variations and modifications can be effected within the spirit and scope of the invention.

### EXAMPLE 1

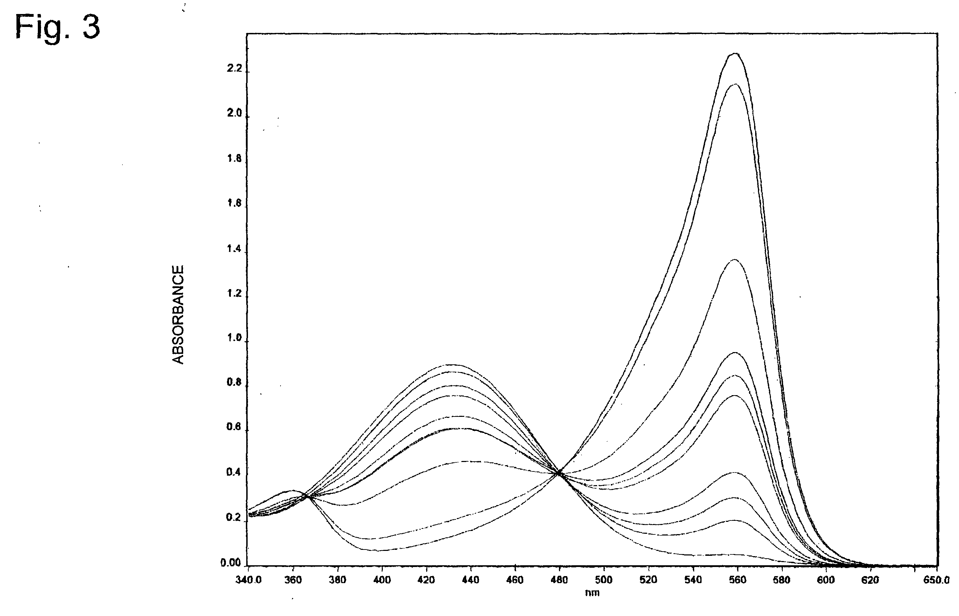

10 mg of phenol red sodium salt (Aldrich) are dissolved in 5 mL of a 0.1 M MES pH 4.7 buffer. 200 µL of a 37% aqueous solution of formaldehyde are added. A 3x3 cm Biodyne B™ 0.45 µm Nylon 6,6 membrane by Pall is immersed into the solution and gently stirred at 60°C for 12 hours. The membrane was then thoroughly washed with a 0.1 M sodium hydroxide, followed by a 0.01 M HCl solution pH 3.0, until the dye stopped leaching out of the membrane. The membrane was stored dry. The UV-VIS absorption spectra of phenol red in solution, at various pH values is shown on fig.3.

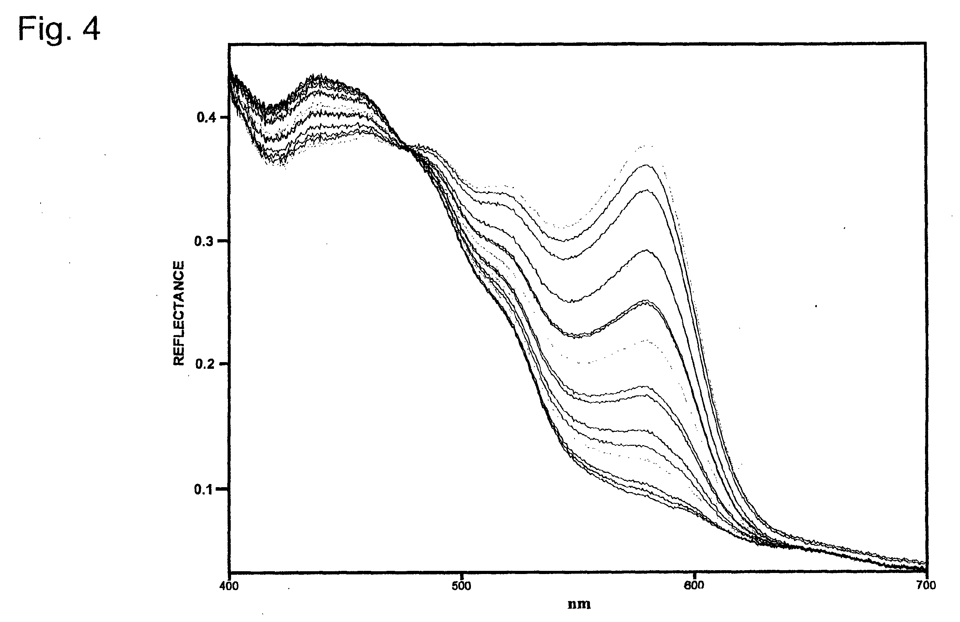

Reflectance spectra of the indicator immobilised by the Mannich reaction on Biodyne B™ membrane are shown on fig.4. These spectra are clearly different from those of the indicator in solution, as the pKa. This behaviour is indicative of the presence of covalently bound indicator. Furthermore, the spectral intensity of the bound indicator did not change upon prolonged exposure (24 hours) to heparinised blood.

### EXAMPLE 2

A 3x3 LoProdyne 0.45 µm nylon 6,6 membrane by Pall was immersed in a 50 mL of dry acetonitrile containing 0.39 g of 2-fluoro-1-methyl-pyridine 4-toluene-sulfonate (Aldrich) and 0.36 mL of triethylamine (Aldrich) for one hour, with gentle magnetic stirring at room temperature. It was then washed thoroughly with acetonitrile and then immersed in a 50 mL solution of 0.5 g of 1,6-diaminohexane in water, pH 9.0. It was again stirred gently for one hour at room temperature. At the end of this period the membrane was washed with water, dried on filter paper. Phenol red was then immobilised in the membrane as described in Example 1. The reflectance spectra of the membrane are shown in fig.6. The pKₐ of the phenol red (9.86) immobilised on LoProdyne was higher than either the solution pKₐ (8.00) or the pKₐ value of the same indicator immobilised in Biodyne B membrane (8.68). Furthermore, when phenol red is immobilised by the Mannich reaction as per procedure shown in Example 1, in yet another type of nylon 6,6-membrane, namely Biodyne A™ (Pall), the pKa of the immobilised indicator is found to be 9.64. Thus, it is possible to adjust the pK interval in which a given indicator can be used in an optical sensor by simply changing the nature of the support.

### EXAMPLE 3

The indicator dye nitrazine yellow, or 4-(2',4'-dinitrophenylazo)-1-hydroxynaphthalene-3,6-disulfonic acid disodium salt (10 mg) is dissolved in 5 mL of water. 10 µL of glacial acetic acid added, followed by 200 µL of a 37% aqueous solution of formaldehyde. A Biodyne B™ 0.45 µm membrane is immersed in the solution and stirred at 57°C for 2 hours. It is then washed thoroughly as shown in Example 1. The pKₐ of the immobilised dye was found to be 5.41, while the pKa of the indicator in solution is 6.60.

### EXAMPLE 4

A microscope glass slide is washed with ethanol, then rinsed with high purity water. Surface silanol groups is obtained by treatment with concentrated hydrochloric acid at 60°C. The slide is rinsed once more with high purity water and then dipped into a 2% solution of 3-aminopropyltriethoxysilane (Fluka) in water. After one hour, the slide was washed with water and then stored overnight under vacuum in a desiccator containing silica gel drying agent. Phenol red was then immobilised onto the slide as shown in Example 1, except the washings were done in 0. 1 carbonate buffer pH 9.5, followed by 0. 1 M citrate buffer, pH 3.0. By the same means, the dye was also successfully immobilised on commercially available aminopropyl silicas and glasses, for example Aminopropyl Glass 80-120 mesh, Sigma product number G-5019, LiChrosorb™ NH₂ HPLC 5µ packing silica by Merck, product number 9376, and CPC-Silica Carrier Silane Coated, silica coated, controlled pore ceramic beads derivatised with 3-aminopropyl-triethoxysilane, Fluka product number 27709.

### EXAMPLE 5

1.0 g of Eupergit C™ (Rohm Pharma; oxyrane acrylic polymer) spherical beads of 100-200 µm diameter were suspended in 9 mL of deionised water containing 800 mg of 1,6-diaminohexane. The mixture is shaken gently for two hours at room temperature. It is washed with water (on a glass filter) until the washing solution shows neutral pH. It is then washed three times with ethanol and dried under vacuum, at room temperature, for 72 hours. By following the procedure of Example 1 phenol red was immobilised onto the amino modified Eupergit C™ beads. Similar results were obtained when 1,8-diaminooxaoctane was used in place of 1,6-diaminohexane.

### EXAMPLE 6

An extended pH range indicator membrane, to be used in a gastric pH sensor was made as follows. An aqueous solution (5mL) containing a concentration 0.25 mM each of cresol red, bromophenol blue, chlorophenol red, and phenol red is prepared. 10 µL of glacial acetic acid added, followed by 200 µL of a 37% aqueous solution of formaldehyde. A Biodyne B™ 0.45 mm membrane was immersed in the solution for 12 hours at 60°C. The membrane was then washed as described in Example 1.

The following dyes were also successfully immobilised on nylon 6,6 Biodyne and LoProdyne™ membranes (Pall) using similar procedures:
Antraquinone dyes: alizarin
Azine dyes: neutral red
Azo dyes: brilliant yellow; methyl red; methyl orange; Congo red; metanil yellow; eriochrome blue black R
Oxazine dyes: Nile blue
Phthalein dyes: phenolphthalein
Sulfonephthalein dyes: cresol red; bromophenol blue; chlorophenol red; phenol red; bromochresol green; bromochresol purple.
Thiazine dyes: azure A, methylene blue
Triphenylmethane dyes: crystal violet, malachite green, basic fuchsin.
Xanthene dyes: fluorescein, rhodamine B.

The method did not work at all with the polymethine dye, 3,3'diethyloxadicarbocyanine iodide.

## Claims

1. An optical sensor for detecting a change in a physical or chemical parameter in a fluid, comprising an indicator compound chemically bonded onto/in a solid substrate, said indicator compound, when exposed to said fluid, being susceptible of varying its optical properties in response to a change in said parameter in said fluid, **characterised in that** the optical sensor is the product obtainable by reacting said indicator compound in a solvent medium with a formaldehyde source in the presence of a solid substrate having functional primary or secondary amino groups.

2. An optical sensor according to claim 1, **characterised in that** said substrate includes aliphatic, primary or secondary amino groups.

3. An optical sensor according to claims 1 or 2, **characterised in that** said substrate is a silica glass or a ceramic material treated with an aminosilane.

4. An optical sensor according to claims 1 or 2, **characterised in that** said substrate is a silicone treated with ethanolic or methanolic alkali metal hydroxides or alkoxides or with an oxidising flame and further reacted with an aminosilane.

5. An optical sensor according to claims 1 or 2, **characterised in that** said substrate is an organic polymer having native primary or secondary amino groups.

6. An optical sensor according to claims 1 or 2, **characterised in that** said substrate is obtained by reacting an organic polymer without native amino groups with an aminosilane.

7. An optical sensor according to claims 1 or 2, **characterised in that** said substrate is obtained by reacting a polymer having activated hydroxyl groups with α,ω-diaminoalkanes or α,ω-diaminooxaalkanes.

8. An optical sensor according to claims 1 or 2, **characterised in that** said substrate is an organic polymer having side chains with epoxy groups, treated with α,ω-diaminoalkanes or α,ω-diaminooxaalkanes.

9. An optical sensor according to any of claims 1 to 8, **characterised in that** said indicator compound has active hydrogen atoms.

10. An optical sensor according to any of claims 1 to 9, **characterised in that** the indicator compound is selected from the group consisting of antraquinone dyes, azine dyes, azo dyes, oxazine dyes, phthalein dyes, sulfonephthalein dyes, thiazine dyes, triphenylmethane dyes and xanthene dyes.

11. An optical sensor according to any of the preceding claims, **characterised in that** said solid substrate is in the form of a membrane.

12. The use of an optical sensor according to any of the preceding claims for detecting a change in a physical or chemical parameter in a fluid.

13. An optical sensor device for detecting a change in a physical or chemical parameter in a fluid, comprising:
- indicator means comprising an indicator compound chemically bonded onto/in a substrate, which indicator compound, when exposed to said fluid, is susceptible of varying its optical properties in response to a change in said parameter in said fluid; and
- optical means for launching a radiation into said indicator means and for collecting a radiation transmitted through, or reflected by, or emitted by said indicator means, **characterised in that** said indicator means is the product obtainable by reacting said indicator compounds with a formaldehyde source in the presence of a substrate having functional primary or secondary amino groups.

14. An optical sensor device according to claim 13, comprising an optical sensor according to any of claims 2 to 11.

15. A process for producing an optical sensor according to any of claims 1 to 11, comprising reacting an indicator compound with a formaldehyde source in the presence of a solid substrate having functional primary or secondary amino groups.
